# EUROPEAN PATENT SPECIFICATION

(11) **EP 2 193 449 B1**
(45) Date of publication and mention of the grant of the patent: **12.10.2016**
(21) Application number: 08795553.0
(22) Date of filing: 25.08.2008
(51) Int. Cl.: G06T 5/00, G06T 5/50, G06T 7/00

(54) **SYSTEM AND METHOD FOR PRESENTING REMOTELY SENSED VISUAL DATA IN MULTI-SPECTRAL, FUSION, AND THREE-SPATIAL DIMENSON IMAGES**
SYSTEM UND VERFAHREN ZUM DARSTELLEN VON FERNERFASSTEN VISUELLEN DATEN IN MULTISPEKTRALEN, FUSIONS- UND DREI RÄUMLICHE DIMENSIONEN AUFWEISENDEN BILDERN
SYSTÈME ET PROCÉDÉ POUR PRÉSENTER DES DONNÉES VISUELLES DÉTECTÉES À DISTANCE DANS DES IMAGES MULTIBANDES, DE FUSION ET TRIDIMENSIONNELLES

(30) Priority: 31.08.2007 IT TO20070620
(43) Date of publication of application: 09.06.2010
(73) Proprietor: Karszes, William M., Cambridge CB1 0GU (GB); Nims, Jerry C., Cambridge CB1 0GU (GB); Capaccio, Giancarlo, 80125 Napoli (IT)
(72) Inventor: KARSZES, William, M., Rosewell, GA 30076 (US); NIMS, Jerry, C., Sandy Springs, GA 30350 (US)
(74) Representative: Manley, Nicholas Michael
(86) International application number: PCT/US2008/010036
(87) International publication number: WO 2009/032088

(56) References cited:
- US-A1- 2006 093 223
- US-A1- 2007 165 093
- US-A1- 2007 195 391
- US-B2- 6 781 707
- US-B2- 6 894 809
- US-B2- 7 127 085
- US-B2- 7 210 836
- 'Microlens arrays :standard and custom' MICROFAB INC., [Online] 2002, pages 1 - 3, XP008131586 Retrieved from the Internet: <URL:www.microfab.com/technology/update_doc s/mlens_handout.pdf> [retrieved on 2008-11-03]

## Description

### BACKGROUND OF THE INVENTION

Images from satellites and other remote sensors ("remote sensors") are used in decision making in a variety of applications and fields including: Agriculture, Cartography, Conservation, Disaster Planning, Education, Electric/Gas, Environmental, Geology, Health and Human Services, Law Enforcement, Local Government, Minerals, Military, Natural resources, Oceans/Seas, Petroleum, Pipeline, Planning, Public Safety, Telecommunications, Tourism, Transportation, Water/Wastewater, and Weather. Applications can range from mapping terrain in dimensional models to tracking the growth of agricultural crops. As these applications expand, more and more algorithms are being developed and software is proliferating to manipulate the data. Also, more and more spectrum data is being used in a combined form according to a matrix, thereby delivering knowledge, rather than information, to solve questions posed by both civilian and military decision makers. Decision makers need to have the information compiled and presented in a clear concise manner. Remote sensor information, including satellite images, aerial images, ballon images, or any other remotely sensed spectral or non-spectral (e.g. infrared images) today are incomplete, where the remote sensor information either portrays flat space and flatland, or stenographic images that require stereo-glasses to view. In either case, an "expert" is required to give his or her opinion as to the content of the remote sensor information. Because of the limits of the remote sensor information, decision makers do not have the complete visual information to personally make an informed decision. The coupe de oeil, power of the glance, for many decision makers, is the difference between success and failure.

In US 6 781 707 images of an object or geographical area are obtained for a plurality of optical bands. The images are transferred to a digital processor which rasterizes and interleaves the images to an output file for printing. The output file is printed in an alignment with a micro-lens sheet having a plurality of lenses. The lenses refract the printed image such that a viewer sees from a first position relative to the hard copy an image corresponding to the object or geographical area as seen in a first frequency band of the optical spectrum and, from a second viewing position sees an image corresponding to the object or geographical area as seen in a second frequency band of the optical spectrum. At least one of the first and second frequency bands may be a non-visible band. The viewed images may include an indicia of the optical band corresponding to the image.

In US 6 894 809 multiple left-eye, right-eye three images of a ground area are obtained from an aerial or satellite platform. The left-eye, right-eye images are transferred to a digital processor which rasterizes and interleaves the images to an output file for printing. The output file is printed on a hard copy medium and overlaid with a microlens sheet having a plurality of lenses. The lenses refract the printed image such that a viewer sees from a first position relative to the hard copy a three-dimensional image of the ground area as seen from a first aerial or satellite viewing position and, from a second position relative to the hard copy, sees a three-dimensional image of the ground area as seen from a second aerial or satellite viewing position.; Optionally, the interleaving and the microlenses are such that a viewer can obtain a 360 degree view, of three dimensional images of the ground area by rotating the hard copy through a plurality of viewing positions.

### SUMMARY

With the foregoing in mind, the principles of the present invention provide for a system as defined in claim 1 and method as defined in claim 11 that produces clear, concise images resulting from multiple remote sensor information that give the decision maker integral visual information that can be rapidly and readily understood. Images produced by the system may be (i) spatially fused images (e.g., three dimensional images), (ii) time-fused images (e.g., time sequence of images), and (iii) spectrally fused images (e.g., images obtained at different bands of the electromagnetic spectrum). The images are considered "fused images."

To generate the fused images, the system may combine computer algorithms with optics, material science, remote sensing technology (e.g., satellite technology), printing technology, and advanced knowledge of the interpretation of different electromagnetic spectrum data. A fused image obtained from the system can solve many of today's leading questions posed to satellite experts, thereby enabling non-remote sensing experts to better understand the image without the assistance of a remote sensing expert. The fused images are formatted so a decision maker can look at remote sensor information in the fused image and make an intelligent decision without relying on reams of expert reports, which is commonly performed today In essence, the expert reports are built into the fused image as visual information. Objects, elements, etc., captured in remote sensor images, may have three spatial dimensions to enable non-remote sensing experts to more readily understand the information contained in the images.

In accordance with a first aspect of the present invention, a system for producing remote sensed images includes an input/output unit platform configured to receive multiple sets of remotely sensed information. A digital processing platform is configured to execute one or more algorithms to process the sets of remotely sensed information to generate a single image including at least two sets of the processed remotely sensed information. A printer is in communication with the digital processing platform and configured to receive and print the single image, where the printed single image is configured to enable a viewer to individually view each set of the processed remotely sensed information. The data sets are captured over time and are time sequence data sets, presented to show time fused images and the data sets are wavelength specific data sets, wherein the processing system is configured to enable a user to select from among different wavelength bands for which remotely sensed information is available based on a problem that is being solved.

Each set of the processed remotely sensed information may be from a different wavelength band. The remotely sensed information may be three dimensional. In one embodiment, the remotely sensed information is printed on or adhered to a micro-lens array that enables a viewer to see each of the remotely sensed images by altering an angle through which the viewer looks at the single image through the micro-lens array.

In accordance with a second aspect of the present invention, a method for generating visual information from remotely sensed information includes collecting first and second remotely sensed images, wherein a user selects from among different warelength bands for which remotely sensed information is available based on a problem that is being solved. The first and second images are processed to orient the images in substantially the same orientation. The first and second images are printed onto a single material, and the single material is configured to enable a viewer to individually view each remotely sensed image at a different angle when viewing the material. The first and second remotely sensed images are captured over time and are time sequence images, presented to show change over a time period.

In one embodiment, the remotely sensed information is printed on or adhered to a micro-lens array that enables a viewer to see each of the remotely sensed images by altering an angle through which the viewer looks at the single image through the micro-lens array.

### BRIEF DESCRIPTION OF THE DRAWINGS

The disclosed invention will be described with reference to the accompanying drawings, which show exemplary embodiments of the invention and which are incorporated in the specification hereof by reference, wherein:
FIGURE 1 is an illustration of an exemplary satellite system configured to collect satellite images of objects using single or multi-image data;
FIGURE 2 is an illustration of an exemplary system (level 1) for generating and presenting one or more fused images derived from remote sensor image data for decision makers to view;
FIGURE 3 is an illustration of an exemplary system (level 2) that uses the remote sensor image data to generate the fused images for decision makers to view;
FIGURE 4 is an illustration of exemplary hardware used to generate hardcopies of fused images derived from remote sensor image data in accordance with the principles of the present invention;
FIGURE 5 is a flow diagram of an exemplary process that describes operation of the system in accordance with the principles of the present invention; and
FIGURE 6 is a flow diagram of another exemplary process that describes operation of the system in accordance with the principles of the present invention.

Human cognitive processing of three spatial dimensions increases visual reasoning. Data fusion or image fusion is a combination of sensed information. A fused image may include (i) spatially fused images (e.g., three dimensional images), (ii) time sequence or time-fused images, or (iii) spectral fusion or combination of images from different regions of the electro-magnetic spectrum ("EMS") (e.g., visual and non-visual spectrum images), as described in U.S Patent 6,781,707. Image fusion may make available visual data collected over a time period, such as over many years, to a viewer. Image fusion is defined as two or more images interphased together so that each image can be distinctly viewed at different angles of viewing. The images may be the same view at different times "time fusion" or the same image viewed with different electromagnetic spectrum wavelengths "EMS Fusion". Three spatial dimensions is a phrase used for describing true view three dimensions. In satellite imagery, the term "3D" is a perspective view of an image on a computer screen, which is differentiated as to what the eye actually would see in capturing a scene. The same applies to other forms of remotely sensed information. A three spatial dimension image captures the true view. By using image fusion, the viewer may see the visual data in a way that is comfortable for a human to visually interpret the visual data. By providing a viewer with both quantitative and qualitative visual data, the viewer is provided with greater clarity to assist the viewer with decision-making.

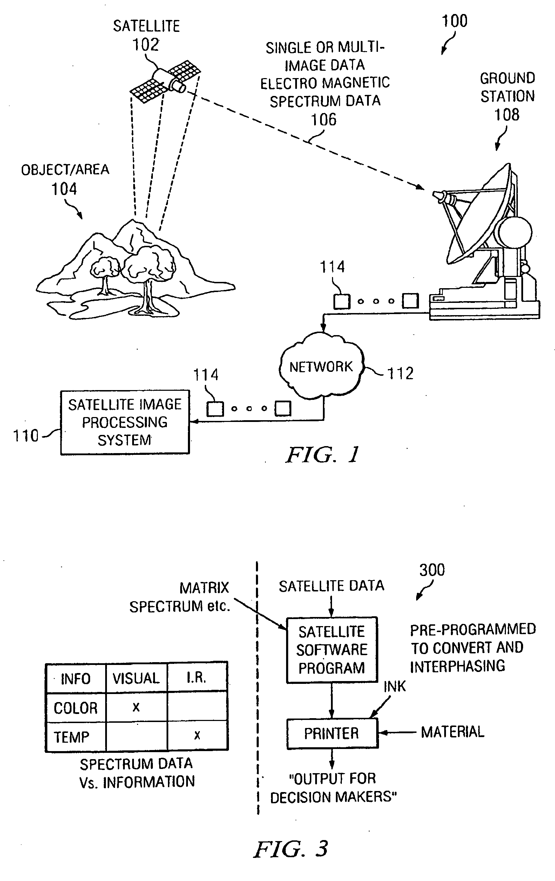

Satellite technology is well established in terms of sensors, hardware, and data collection. FIGURE 1 is an illustration of an exemplary satellite system 100 configured to collect satellite images of objects using single or multi-image data. A satellite 102 may be equipped with either single point or multi-point sensors (not shown) to collect satellite image data in an area 104 as it passes over in the form of pixel data. This pixel data or satellite image data is collected as multi-bit information or a set of data. The sensors may be capable of collecting the satellite image data from all regions of the electro-magnetic spectrum, such as visible, infrared, radar, ultrasound, gamma, etc., or over a subset of the EMS. Furthermore, the satellite image data may be spatially fused (e.g., three dimensional) and/or as a time sequence.

The satellite image data may be transmitted via satellite signals 106 to ground stations located around the world. The satellite signals 106 may include single or multi-image electromagnetic spectrum data collected using remote sensors. The satellite signals 106 may be analog or digital and be communicated using any communications protocol as understood in the art. A ground station 108 may receive the satellite signals 106 and collect and store the satellite image data communicated therein. The satellite image data can then be relayed to a remote sensor information processing system 110 via a network 112. In one embodiment, the satellite image data is communicated via the network 112 in the form of data packets 114, where the network 112 may be a local area network (LAN) or wide area network (WAN) (e.g., the Internet), or otherwise.

Although FIG. 1 describes operation of a remote sensing system as being satellite, the principles of the present invention may additionally or alternatively use other remote sensors to collect remote sensor information. For example, airplanes and hot air balloons that are equipped with remote sensor equipment or sense electromagnetic spectrum information (e.g., visual images of a ground region or thermal imaging of atmosphere above ground) may be utilized to collect image data sets. The remote sensor information, whether collected from the same or different remote sensor platform, may be fused into a fused image. In the event of using other remote sensors, rather than broadcasting the remotely sensed information, the information may be collected on a medium, such as digital tape or magnetic medium, and directly or indirectly inserted into the remote sensor information processing system 110. It should be understood that the remotely sensed information or images may include data sets of ground or above ground (e.g., atmosphere) information.

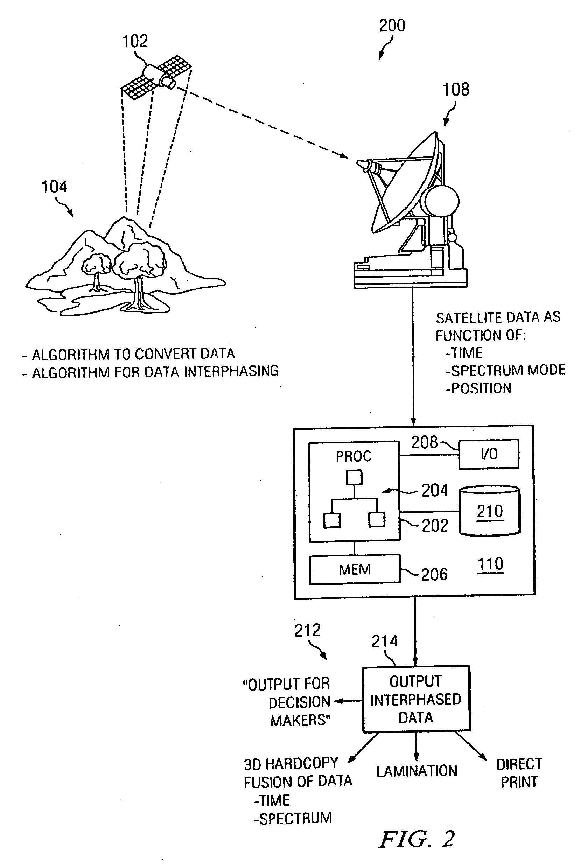

FIGURE 2 is an illustration of an exemplary system ("Level One") 200 for generating and presenting one or more fused images derived from remote sensor information for decision makers to view. As satellites orbit or other remote sensors travel over the earth, various images of areas are collected as a function of time. The satellite image data is received by the remote sensor information processing system 110 for processing. The remote sensor information processing system 110 may include a processing unit 202 that executes software 204 that perform various algorithms. The processing unit 202, which may include one or more processors, may be in communication with a memory 206, input/output (I/O) unit 208, and storage unit 210, where the memory 206 stores information during execution of the software 204, I/O unit 208 operates to communicate with the ground station 108 and output devices 212, and storage unit 210 stores remote sensor information generated by the algorithms.

The remote sensor information may include single point or multi-point image data and can be a collection of spectrum data from a single point in time or a collection of spectrum data over time. The remote sensor information may be any or all of spatially, time, or spectrally fused data, where each set of data may be considered an image. The remote sensor information may be transformed or manipulated into usable form by internal algorithms. For example, a data set may be of a non-visual spectral region of the electromagnetic spectrum, and the internal algorithms may generate a visual representation of the non-spectral data set. It should be noted that a usable form is relative to formats compatible within the language of system algorithms in accordance with the principles of the present invention. Mathematical adjustment of images may also be completed to insure overlap and be orthogonally correct. These mathematical adjustment algorithms to orient or otherwise align images are known in the art and within the public domain. The algorithms used may vary depending upon (i) the satellite from which the data is taken, (ii) the wavelengths used, and (iii) the data manipulation performed for the resulting visual data presentation. The "compatibilized" data may be turned into a pixel array prescribed by the internal algorithms. Inherent within the system are algorithms described by U.S. Patents 6,781,707, 6,894,809, and 7,019,865.

The manipulated data, which may be interphased, may then be printed onto paper and overlaid with a specially designed micro-optic lens array or printed onto a micro-optic array through the use of a specially designed printer, as described in U.S. Patent 6,709,080. The term "interphased" means a manipulation of images, generally by a computer, where the images are segmented into lines and then interphased into a single image. A single image may be composed of individual lines in a prescribed array such that when the micro-optical lens array is over-laid, the prescribed multi-dimensional image may be viewed. The system 200 is referred to as Level One, which is a descriptive name of the level of technical sophistication used in producing the described image. Inherent in this system are the appropriate algorithms, as described above, to format the data and manipulate the data to the desired results.

Output data 214 may be presented as multi-dimensional imagery and/or fused data. In remote sensing imaging, the ability to display depth of field in hardcopy format is not otherwise commercially available. The ability to reach beyond visual images into the spectrum not visible to the human eye (e.g., gamma, infra-red, sonar/radar, and x-ray) further allows for data streaming to be collected from remote sensors and incorporated into a single image on a single sheet, where the image includes multiple pages of information. The single image may be uniquely meaningful to decision maker(s) who may or may not be experts in interpreting remote sensor images. The system 200 enhances expert analysis by incorporating their knowledge into the algorithms presented above into associated software platform. In addition, the system 200 provides for knowledge as to data collected from different EMS wavelengths. Analytical knowledge is incorporated as the EMS and time sequence images can be viewed and, based on the images, decisions can be made. The knowledge of what images to use comes from the expert, the meaning of each individual image comes from the expert, but the collective conclusion comes from the decision maker. Thus, expert knowledge embedded into the system 200 enables decision makers to interpret the information without the assistance of an expert, thereby improving understanding and efficiency for the decision maker.

The system 200 provides for both immediacy and ease of use as the system 200 provides for real time feedback in the form of a hardcopy and no or little training to operate, as compared to current technology and availability. The power of the view of a fused image cannot be underestimated, where the viewer is the ultimate decision maker. Below are examples where the decision maker may readily understand and interpret satellite images in accordance with the principles of the present invention.
(1) Ground movement in the Naples area was tracked over an extended period of time. This ground movement was time-fused together to provide an overall image of Naples. When the image was moved (i.e., the angle of viewing was changed), the areas where ground movement occurred (i.e., the new image) projected the movement. Thus, the image can differentiate unstable areas and relate instability depending on the degree of motion. Insurance executives (i.e., decision makers) can view this fused image to determine degree of risk. Urban planners (i.e., decision makers) can view as to the danger or type of construction needed in a given area. All this remote sensor information may be contained in one image and easily viewed and interpreted by a decision maker.
(2) A time sequence of pollution clouds may be created from time sequence data to plot the path and document for future reference the effect of the pollution on affected areas. Use of remote sensor information or data by insurance companies against claims due to disasters that move due to wind can be made to view if a claimed area was in the disaster zone. Tracking pollutants relative to contamination can be read off a hardcopy on the ground by a secondary unit.

As previously described, data or image fusion may involve spatial information (e.g., 3D), a combination of visual information as a time sequence, or spectrally diverse information, such as a combination of images from the same or different regions of the electro-magnetic spectrum collected by remote sensors. Thus, data fusion can answer such questions as, "where is the best topographical structure to explore for oil, gas and water?" Again, remote sensing experts can interpret remote sensor images and reports to provide an answer, but non-experts generally do not have the ability to fully interpret the remote sensor images and, thus, cannot make educated decisions without the assistance of one or more remote sensor experts.

The system 200 and software 204 may compile remote sensor information, such as images, satellite images over a time sequence or in one or more frequency band and provide an output format, such as a single fused image, that enables a decision maker, who may or may not be an expert, in interpreting satellite images. A single, fused image may reinforce reports and enhance conclusions for the decision maker. The fused image by itself may even answer specific questions that are otherwise difficult to answer using multiple satellite images. Furthermore, spatially real-time hardcopy maps can be generated with highlighted sites to explore for teams going to a remote area. While a computer can simulate multi-dimensional images on a monitor, a team working in areas without power or who desire to insure against a computer crash in the field, may find a hardcopy map to be far more reliable. Multi-dimensional models can be generated from sonic or MRI data at a site to further pinpoint exact locations where, for instance, oil or gas may be found. The use of multi-dimensional image maps may lessen the number of exploratory wells and map the field for the best location to establish a well, thereby saving time and money for the user.

A multi-dimensional hardcopy is better than conventional maps and reports due to the spectral and reflective color details inherent in the images. By way of the system described herein, not only are two channels being included in a satellite image, but also a multiplicity of channels is being added. The number of channels used may be determined by the complexity of the problem being solved and the design of the micro-optical material used. Typically, the more complex a problem is, more information is generally used to address the answer. The greater the amount of information, the larger the amount of channels of information used in the interphasing program, where each image may be broken into discrete lines and then the lines are interphased to line up behind the micro-optical material. To obtain the best fidelity of the image, the information may be presented off the array to the viewer's eyes in the appropriate sequence and in the right frames. Optical ray tracing techniques and knowledge of the printer resolution are utilized to design the optimum lens array configuration to present the information to the viewer appropriately.

The system 200 provides the ability to time fuse data. The ability to time fuse data allows sequences of events to show as a motion, which enables the decision maker to gain a better grasp of the direction of events or to anticipate the evolution of a sequence. Also, using time fusion, before and after sequences can be observed for information, such as insurance damage, progress of projects, and impact of man-made structures on the environment. Within the algorithms described above is the ability to tie multi-views into multi-dimensional imagery with controlled parallax. The algorithm control the parallax relative to the lens system being used, pixels per inch output by a special printer, and rules developed from prior depth of field work, as further described in U.S. Patents 4,086,585 and 4,124,291. Ability to control the parallax and depth of field means the resultant imagery is accurate and capable of being used to gain measurement calculations. The image overlay also allows accurate depth maps to be created, which can lead to further refinement and views by creating on-screen virtual three- dimensional imagery. The software may be used to create a hardcopy of the images. The system 200 provides the ability to use ray tracing techniques to create multi-dimensional images from different views of the same scene.

FIGURE 3 is an illustration of an exemplary system 300 (Level Two) that uses the remote sensor information (e.g., image data) to generate the fused images for decision makers. The system 300 may be used to create "fused quantitative data that visually answers the question." Consistent with FIGURE 2, different bandwidths from the electromagnetic spectrum can be used to give different information about a remotely sensed image. The system 300 is geared towards utilizing an expert generated matrix to "finger print" a remotely sensed image. For example, a matrix may list wavelengths of an electromagnetic spectrum, defined as visible spectrum, infra-red spectrum, radar, sonar, etc., and information gained from such bandwidth(s). Below is an example of a band matrix, where examples of information that may be generated in different bandwidths are provided.

| Band | Wavelength (Nanometers) | Spectral Regions | Principal Application |
|---|---|---|---|
| 1 | 450-520 | Blue | Costal waterway mapping Discriminating soils, vegetation and forests Delineating cultural features Limited water penetration |
| 2 | 520-600 | Green | Assessing the health of vegetation Identifying cultural features |
| 3 | 630-690 | Red | Chorophyll absorption sensitivity aids In plant differentiation |
| 4 | 760-900 | Near Infrared | Type and health of vegetation Biomass content estimation Soil moisture estimation |
| 5 | 900-1,750 | Mid-Infrared | Vegetation stress Soil moisture content assessment Thermal mapping |
| 6 | 2,080-2,350 | Mid-Infrared | Discrimination mineral and rock types Vegetation moisture content assessment |
| 7 | 10,400-12,500 | Thermal Infrared | Vegetation stress Soil moisture determination Thermal Mapping |

Thus, if a specific solution for a stated problem is sought, then the matrix may be used to determine which bandwidth(s) may be used to formulate a solution. For example, for a given region, water is rationed and the water authorities want to know what sub-regions need to receive water for irrigation. (Stated Problem) From the above exemplary band matrix, the first three bands may be combined into a visual image. (Image one) Then, the image produced from Band 4 may be used to see what type of plants are in the sub-regions and gain info on the moisture in the soil. (Image two) Image three may be taken from Band 7 to assess plant moisture and combine with an image (Image four) from Band 5 or 6 to view vegetation stress. These four images may then be fused into one multi-spectral image by the system described herein. The decision maker may then be able to view the information on the multi-spectral image by rotating the multi-dimensional image to change the viewing angle. As questions arise in the decision maker's mind, further rotation back and forth provides a quick answer. This image may be combined with a time fusion of the region from any of the bands, such as Band 7, determining the rate of loss of moisture in the vegetation. This example represents one example of the use of the system in accordance with the principles of the present invention. Different matrices may be formulated depending on the stated problem. Each stated problem may have a different set of multi-dimensional images for solving the stated problem.

In one embodiment, the processing system 110 (FIG. 1) may be configured to enable a user to select from among the different wavelengths for which remotely sensed information is available based on a problem that is being solved. The processing system 110, which may have access to a band matrix or other formatted band information, may access the remotely sensed information to process. The processing may orient and otherwise align the remotely sensed information to form a single image include each of the sets of remotely sensed information over each of the wavelength bands. The single image may be printed on a material that, when viewed through a micro-lens array, allows the viewer to see each of the images produced from respective remotely sensed information over respective wavelength ranges, as further described herein.

Once the appropriate bandwidths are chosen, data from remote sensors can be downloaded into the system 300 and fused visual information can be generated so a person can gather information to proceed to determine a solution to a current problem. The system can also generate a multi-dimensional hardcopy of the area in question for further review and study. The multi-dimensional hardcopy of the area in question may be used to solve the given problem by decision makers with little or no technical support. The hyper-spectral (i.e., multi-spectral) display may act as written output of an analytical device. The system, in accordance with the principles of the present invention, provide for intermediate steps that may be performed, such as forming the matrix of bands available and then choosing the bands, to answer a specific problem.

Using a systematic approach from the posing of a question to the postulation of the remote sensed information to answer the posed question to the manipulation of the data to create a hyper-spectral display and final to output the display may be employed in accordance with the principles of the present invention. The systematic approach may be performed by combining the remote sensor software program or platform that delivers light to a special printer that uses a special MicrOptical™ material (as described herein and within the patents incorporated by reference) with special inks to create the finished visual display of data. The special ink may be formulated to adhere to the lens array formed of the MicrOptical™ material, for example. Alternatively, the ink may be printed on another material and adhered to the lens array. Thus, the system, as described herein, simplifies the use of satellite data. Each platform within the system may be tailored to answer a problem based on the expert's input, where the expert's input is embedded in the software such that the decision maker may receive input data from a variety of different and well specified source(s), such as an existing satellite or a new satellite.

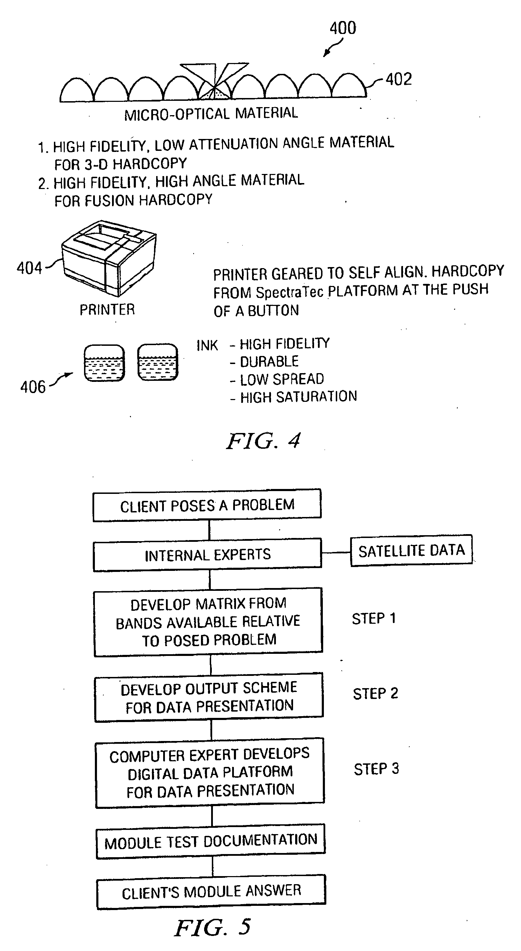

The system 300 or platform that includes internal algorithms may compile and fuse remotely sensed information such as image data, and send the compiled and fused remotely sensed information to a specially designed output device that prints on specially designed material to create a visual display that contains "fused quantitative data that visually answers the question." Based on the expert's input, which is embedded into the software program created to answer the posed question and the Level Two system of FIGURE 3, preprogrammed modules may be created, as provided in FIGURE 5, which explains as a flow diagram how the system operates. FIGURE 5 may be used to answer broad questions, such as:
Program Pollution: A Pollution Module may be configured to track the effects of pollution over a period of time. The pollution module may have the ability to fuse different spectrum data as a function of time.
Program Earth: An Earth Module may track changes in the Earth as a function of time. Movement of ground height as a function of time in geologically unstable areas is one example of tracking changes in the Earth. Other examples include tracking erosion, fault separation, lava flows, etc.
Program Urban Planning: An Urban Planning Tracking Module may track development as a function of time. Housing, land clearing, deforestation, and other structural tracking may be tracked over time.

FIGURE 4 is an illustration of exemplary hardware 400 that may be used to generate hardcopies of fused images derived from remotely sensed information, such as satellite image data, in accordance with the principles of the present invention. The hardware may define the types of output that is available for users to generate from the fused images. Three components of the hardware may be utilized in accordance with the principles of the present invention, including:
1. A multi-variant optical medium 402 represents an optical base that allows the system to be decoupled by a viewer's eye. Two types of material may generally be utilized. One material is a high fidelity, low attenuation angle material used for multi-dimensional displays. The second material is a high fidelity, high angle material used for fused systems. The materials can be either adhesively backed for lamination or coated for ink receptivity. In one embodiment, a 60 lens per inch wide angle lens design may be used for the time fusion and EMS fusion. A 100 lens per inch wide angle lens design with approximately 34 to 36 degree attenuation angle for the "True View" data display may be used. Both of these lenses may be cylindrical. However, other lens designs may be utilized that perform the same or equivalent functionality. The system variables may include the dots per inch (DPI) of the printer, the number of frames being viewed, the thickness of the material, the index of refraction of the lens, the angle of attenuation of the lens, and the shape of the lens. These parameters are mathematically related and known to those skilled in the art. One embodiment of the material may include be manufactured using one of the processes described in US 5,362,351 or US 6,060,003. High fidelity refers to material that has an attenuation angle between approximately 32 and approximately 38 degrees. This angle range is well suited for "True View" data display and yields sharp in focused images. Higher attenuation angles tend to distort the boundaries of objects and are not as focused. A wider angle material works well for fused images as the cross over between images tends to be more controllable.
2. A special printer may be utilized to optically align the medium to the print head. The printer may be designed to use either light or ultrasound to detect the lens pattern. By sensing the peaks of the lenses and providing feedback to the printer head, the printer aligns and registers the micro optical material. This registration enables controlling the placement of the dots to maximize the fidelity (i.e., sharpness). Utilizing light and sensors, the lens spacing or pitch of the medium is sensed and fed back to the print head so a rasterized image is aligned to the medium. Special dot patterns are used to yield the highest fidelity to the image. The printer may include arrays that are designed for plane (X-Y) images. Other arrays may be utilized in accordance with the principles of the present invention.
3. Special inks may be used with the system. These inks give high fidelity, low spread and high saturation to the print. The inks are formulated to work well with a coating on the back of a print medium. The inks also are durable and waterproof. Several factors may be involved in an ink system to operate in accordance with the principles of the present invention. First, a coating may be applied to plastic as opposed to paper. Second, printing may be performed on the back of the plastic such that light travels through the plastic and then travel back out to the viewer to see the image. Normal printing is on the surface and the eyes receive the reflected light directly. In one embodiment, a total system of coating is printed or otherwise deposited on the back of the micro optical material so the ink sticks to the coating. Plastic that has low surface energy causes very little ink to stick without first treating or coating the plastic surface, and the ink should have to have stronger pigmentation to overcome the transmittance through the plastic lens sheet twice. The stronger pigmentation may be held with the smallest dot size possible, which is equivalent to standard dot sizes.

FIGURE 5 is a flow diagram of an exemplary process 500 that describes operation of the system in accordance with the principles of the present invention. The process 500 represents a module development for a client posed problem. As shown, a client or decision maker poses a problem at step 502. Remotely sensed data 504 may be collected and internal experts may review the data at step 506 to determine how best to combine the data to generate a matrix of bands available to address the posed problem at step 508. An output scheme may be determined to create a data presentation at step 510. At step 512, a digital data platform (DDP) or digital processing platform may be developed for data presentation. The client may view the satellite data as combined into a single image of the remotely sensed data or multiple images showing different combinations of the remotely sensed data to generate module test documentation at step 514 to make a decision as to how to solve the posed problem at step 516.

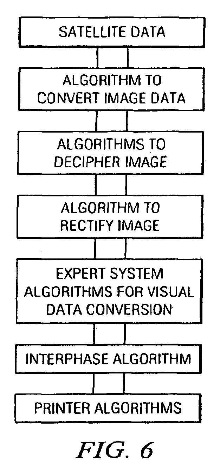

FIGURE 6 is a flow diagram of another exemplary process 600 that describes operation of the system in accordance with the principles of the present invention. At step 602, remotely sensed data may be collected. The remotely sensed data may include visual or non-visual data in the electromagnetic spectrum. At step 604, an algorithm may be utilized to convert the image data. Such an algorithm may be located at either NASA or Goddard Space websites. At step 606, algorithms that decipher the image resulting from step 604 may be utilized. Such algorithms may be found at Idaho Water Resources website. An algorithm to rectify the image may be performed at step 608. The algorithm may ensure that each set of remotely sensed data is aligned and has substantially the same orthogonal representation. The algorithm to rectify the image may be found at www microimages.com/getstart/pdf/rectify.pdf.

At step 610, an expert system containing algorithms for visual data conversion may be provided. As previously described, the expert system may be created based on a problem posed by a customer. One or more remote sensor expert may provide the system with information to convert visual data. At step 612, an interphase algorithm may be utilized to generate a fused image of the remotely sensed data. The interphase algorithm may be found in U.S. Patents 6,781,707, 6,894,904, and 7,019,865. At step 614, printer algorithms may be utilized to print the fused image. The printer algorithms may be found in U.S. Patent 6,709,080. At each step shown, an algorithm may be performed, thereby resulting in remotely sensed data 602 being processed and printed to enable a decision maker to be able to view multiple images to be combined and printed onto a single sheet. It should be understood that the process shown is not limited, but merely sets forth one embodiment in accordance with the principles of the present invention.

The above description has been presented for purposes of illustration and description, and is not intended to be exhaustive or limited to the illustrative embodiments in the form disclosed. Many modifications and variations within the scope of the appended claims will be apparent to those of ordinary skill in the art.

## Claims

1. A system (200) for producing remote sensed images, said system (200) comprising:
an input/output unit platform configured to receive multiple sets of remotely sensed information;
a digital processing platform configured to execute one or more algorithms to process the sets of remotely sensed information to generate a single image including at least two sets of the processed remotely sensed information;
a printer in communication with said digital processing platform and configured to receive and print the single image, wherein the printed single image is configured to enable a viewer to individually view each set of the processed remotely sensed information, wherein the data sets are captured over time and are time sequence data sets, presented to show time fused images and the data sets are wavelength specific data sets, wherein the processing system is configured to enable a user to select from among different wavelength bands for which remotely sensed information is available based on a problem that is being solved.

2. The system (200) according to claim 1, wherein the at least two sets of the processed remotely sensed information are from different wavelength bands.

3. The system (200) according to any of the preceding claims, wherein the remotely sensed data includes visual data sets from different hyperspectral bands from an electromagnetic spectrum.

4. The system (200) according to any of the preceding claims, wherein the image is a multi- dimensional image.

5. The system (200) according to any of the preceding claims, wherein the printer is configured to print the single image onto a material that is coated for ink receptivity.

6. The system (200) according to any of the preceding claims, further comprising a micro-lens array disposed in front of the printed single image such that a viewer looks through the micro-lens array to see each set of the processed remotely sensed information in the single image and, optionally,
wherein the lens array includes between 60 and 100 lenses per inch and, optionally,
wherein the lens array has an approximately 34 to approximately 36 degree attenuation angle.

7. The system (200) according to any of the preceding claims, wherein said digital processing platform enables a user to select from a plurality of selectable wavelength band options to selectively print remotely sensed information over respective selected wavelength bands.

8. The system (200) of claim 1, wherein the user may select multiple ones of the different wavelength bands to be fused and presented together.

9. The system (200) of claim 1, wherein the different wavelength bands are presented in a band matrix, the band matrix listing bandwidths and information gained from such bandwidths.

10. The system (200) of claim 1, wherein time-fused images are merged with wavelength specific images.

11. A method for generating visual information from remotely sensed information, said method comprising:
collecting a first remotely sensed image,
collecting a second remotely sensed image, wherein a user selects from among different wavelength bands for which remotely sensed information is available based on a problem that is being solved;
processing the first and second images to orient the images in the substantially the same orientation ;
printing the first and second remotely sensed images onto a single material; and
configuring the single material to enable a viewer to individually view each remotely sensed image at a different angle when viewing the material, wherein the first and second remotely sensed images are captured over time and are time sequence images, presented to show change over a time period.

12. The method according to claim 11, wherein collecting the first image includes collecting an image over a visual spectrum and collecting the second image includes collecting an image over a non-visual spectrum.

13. The method according to claim 12, wherein collecting the first and second remotely sensed images includes collecting three dimensional images.

14. The method according to claim 11 or claim 13, wherein collecting the first and second remotely sensed images includes collecting images that are of the same location and taken at different times.

15. The method according to any of claims 11 to 14, wherein collecting the remotely sensed images include collecting at least one image including an image focused on a portion of ground.

## Patentansprüche

1. System (200) zum Erzeugen von fernerfassten Bildern, wobei das genannte System (200) Folgendes umfasst:
eine Ein-/Ausgabeeinheit-Plattform, konfiguriert zum Empfangen von mehreren Sätzen von fernerfassten Informationen;
eine Digitalverarbeitungsplattform, konfiguriert zum Ausführen von einem oder mehreren Algorithmen zum Verarbeiten der Sätze von fernerfassten Informationen zum Erzeugen eines einzelnen Bildes, das wenigstens zwei Sätze der verarbeiteten fernerfassten Informationen beinhaltet;
einen Drucker in Kommunikation mit der genannten Digitalverarbeitungsplattform, konfiguriert zum Empfangen und Drucken des einzelnen Bildes, wobei das gedruckte einzelne Bild so konfiguriert ist, dass es einem Betrachter ermöglicht, jeden Satz der verarbeiteten fernerfassten Informationen individuell zu betrachten, wobei die Datensätze über die Zeit erfasst werden und Zeitablaufdatensätze sind, präsentiert zum Zeigen von zeitlich verschmolzenen Bildern, und die Datensätze wellenlängenspezifische Datensätze sind, wobei das Verarbeitungssystem so konfiguriert ist, dass es einem Benutzer ermöglicht, aus unterschiedlichen Wellenlängenbändern, für die fernerfasste Informationen zur Verfügung stehen, auf der Basis eines Problems auszuwählen, das gelöst wird.

2. System (200) nach Anspruch 1, wobei die wenigstens zwei Sätze der verarbeiteten fernerfassten Informationen von unterschiedlichen Wellenlängenbändern sind.

3. System (200) nach einem der vorherigen Ansprüche, wobei die fernerfassten Daten visuelle Datensätze von unterschiedlichen Hyperspektralbändern von einem elektromagnetischen Spektrum beinhalten.

4. System (200) nach einem der vorherigen Ansprüche, wobei das Bild ein mehrdimensionales Bild ist.

5. System (200) nach einem der vorherigen Ansprüche, wobei der Drucker zum Drucken des einzelnen Bildes auf ein Material konfiguriert ist, das zum Erzielen von Tintenaufnahmefähigkeit beschichtet ist.

6. System (200) nach einem der vorherigen Ansprüche, das ferner ein Mikrolinsenarray umfasst, das vor dem gedruckten einzelnen Bild angeordnet ist, so dass ein Betrachter durch das Mikrolinsenarray blickt, um jeden Satz der verarbeiteten fernerfassten Informationen in dem einzelnen Bild zu sehen, und wobei optional
das Linsenarray zwischen 60 und 100 Linsen pro Zoll enthält, und wobei optional
das Linsenarray einen Dämpfungswinkel von etwa 34 bis etwa 36 Grad hat.

7. System (200) nach einem der vorherigen Ansprüche, wobei die genannte Digitalverarbeitungsplattform einem Benutzer ermöglicht, aus mehreren wählbaren Wellenlängenbandoptionen auszuwählen, um fernerfasste Informationen über jeweilige gewählte Wellenlängenbänder selektiv zu drucken.

8. System (200) nach Anspruch 1, wobei der Benutzer mehrere der unterschiedlichen Wellenlängenbänder auswählen kann, die miteinander verschmolzen und präsentiert werden sollen.

9. System (200) nach Anspruch 1, wobei die unterschiedlichen Wellenlängenbänder in einer Bandmatrix präsentiert werden, wobei die Bandmatrix Bandbreiten und von solchen Bandbreiten gewonnene Informationen aufführt.

10. System (200) nach Anspruch 1, wobei zeitlich verschmolzene Bilder mit wellenlängenspezifischen Bildern zusammengeführt werden.

11. Verfahren zum Erzeugen von visuellen Informationen von fernerfassten Informationen, wobei das genannte Verfahren Folgendes beinhaltet:
Sammeln eines ersten fernerfassten Bildes,
Sammeln eines zweiten fernerfassten Bildes, wobei ein Benutzer aus unterschiedlichen Wellenlängenbändern, für die fernerfasste Informationen zur Verfügung stehen, auf der Basis eines Problems auswählt, das gelöst wird;
Verarbeiten des ersten und zweiten Bildes, um die Bilder in im Wesentlichen derselben Orientierung zu orientieren;
Drucken der ersten und zweiten fernerfassten Bilder auf ein einzelnes Material; und
Konfigurieren des einzelnen Materials, um einem Betrachter zu ermöglichen, beim Betrachten des Materials jedes fernerfasste Bild in einem anderen Winkel individuell zu betrachten, wobei das erste und zweite fernerfasste Bild im Laufe der Zeit erfasst werden und Zeitabfolgebilder sind, präsentiert zum Zeigen von Änderung über eine Zeitperiode.

12. Verfahren nach Anspruch 11, wobei das Sammeln des ersten Bildes das Sammeln eines Bildes über ein visuelles Spektrum beinhaltet und das Sammeln des zweiten Bildes das Sammeln eines Bildes über ein nicht visuelles Spektrum beinhaltet.

13. Verfahren nach Anspruch 12, wobei das Sammeln des ersten und zweiten fernerfassten Bildes das Sammeln von dreidimensionalen Bildern beinhaltet.

14. Verfahren nach Anspruch 11 oder Anspruch 13, wobei das Sammeln des ersten und zweiten fernerfassten Bildes das Sammeln von Bildern beinhaltet, die vom selben Ort zu unterschiedlichen Zeitpunkten aufgenommen wurden.

15. Verfahren nach einem der Ansprüche 11 bis 14, wobei das Sammeln der fernerfassten Bilder das Sammeln von wenigstens einem Bild beinhaltet, das ein auf einem Bodenabschnitt fokussiertes Bild beinhaltet.

## Revendications

1. Un système (200) de production de images détectées à distance, ledit système (200) comprenant :
une plateforme d'unité d'entrée/sortie configurée de façon à recevoir une pluralité d'ensembles d'informations détectées à distance,
une plateforme de traitement numérique configurée de façon à exécuter un ou plusieurs algorithmes destinés au traitement des ensembles d'informations détectées à distance de façon à générer une image unique comprenant au moins deux ensembles des informations détectées à distance traitées,
une imprimante en communication avec ladite plateforme de traitement numérique et configurée de façon à recevoir et imprimer l'image unique, où l'image unique imprimée est configurée de façon à permettre à un spectateur de visionner individuellement chaque ensemble des informations détectées à distance traitées, où les ensembles de données sont capturés au fil du temps et sont des ensembles de données de séquence temporelle, présentés de façon à montrer des images fusionnées temporellement et les ensembles de données sont des ensembles de données spécifiques à une longueur d'onde, où le système de traitement est configuré de façon à permettre à un utilisateur de sélectionner parmi différentes bandes de longueur d'onde pour lesquelles des informations détectées à distance sont disponibles en fonction d'un problème en cours de résolution.

2. Le système (200) selon la Revendication 1, où les au moins deux ensembles des informations détectées à distance traitées proviennent de bandes de longueur d'onde différentes.

3. Le système (200) selon l'une quelconque des Revendications précédentes, où les données détectées à distance comprennent des ensembles de données visuelles provenant de bandes hyperspectrales différentes à partir d'un spectre électromagnétique.

4. Le système (200) selon l'une quelconque des Revendications précédentes, où l'image est un image à plusieurs dimensions.

5. Le système (200) selon l'une quelconque des Revendications précédentes, où l'imprimante est configurée de façon à imprimer l'image unique sur un matériau qui est enrobé pour une réceptivité à l'encre.

6. Le système (200) selon l'une quelconque des Revendications précédentes, comprenant en outre un réseau de microlentilles disposé devant l'image unique imprimée de sorte qu'un spectateur regarde au travers du réseau de microlentilles de façon à voir chaque ensemble des informations détectées à distance traitées dans l'image unique et, éventuellement,
où le réseau de lentilles comprend entre 60 et 100 lentilles par pouce et, éventuellement, où le réseau de lentilles possède un angle d'atténuation d'approximativement 34 à approximativement 36 degrés.

7. Le système (200) selon l'une quelconque des Revendications précédentes, où ladite plateforme de traitement numérique permet à un utilisateur de sélectionner parmi une pluralité d'options de bande de longueur d'onde sélectionnables de façon à imprimer de manière sélective des informations détectées à distance sur des bandes de longueur d'onde sélectionnées respectives.

8. Le système (200) selon la Revendication 1, où l'utilisateur peut sélectionner une pluralité de bandes parmi les différentes bandes de longueur d'onde à fusionner et à présenter conjointement.

9. Le système (200) selon la Revendication 1, où les différentes bandes de longueur d'onde sont présentées dans une matrice de bandes, la matrice de bandes dressant la liste de largeurs de bande et d'informations obtenues à partir desdites largeurs de bande.

10. Le système (200) selon la Revendication 1, où des images fusionnées temporellement sont fusionnées avec des images spécifiques à une longueur d'onde.

11. Un procédé de génération d'informations visuelles à partir d'informations détectées à distance, ledit procédé comprenant :
le recueil d'une première image détectée à distance
le recueil d'une deuxième image détectée à distance, où un utilisateur sélectionne parmi différentes bandes de longueur d'onde pour lesquelles des informations détectées à distance sont disponibles en fonction d'un problème en cours de résolution,
le traitement de la première et de la deuxième image de façon à orienter les images dans sensiblement la même orientation,
l'impression des première et deuxième images détectées à distance sur un matériau unique, et
la configuration du matériau unique de façon à permettre à un spectateur de visionner individuellement chaque image détectée à distance à un angle différent lorsqu'il regarde le matériau, où les première et deuxième images détectées à distance sont capturées au fil du temps et sont des images de séquence temporelle présentées de façon à montrer une modification sur une période temporelle.

12. Le procédé selon la Revendication 11, où le recueil de la première image comprend le recueil d'une image sur un spectre visuel et le recueil de la deuxième image comprend le recueil d'une image sur un spectre non-visuel.

13. Le procédé selon la Revendication 12, où le recueil des première et deuxième images détectées à distance comprend le recueil d'images en trois dimensions.

14. Le procédé selon la Revendication 11 ou 13, où le recueil des première et deuxième images détectées à distance comprend le recueil d'images qui proviennent du même emplacement et sont prises à des instants différents.

15. Le procédé selon l'une quelconque des Revendications 11 à 14, où le recueil des images détectées à distance comprend le recueil d'au moins une image comprenant une image focalisée sur une partie du sol.
